# EUROPEAN PATENT APPLICATION

(11) **EP 0 914 865 A1**
(43) Date of publication of application: **12.05.1999**
(21) Application number: 97308930.3
(22) Date of filing: 06.11.1997
(51) Int. Cl.: B01J 29/03

(54) **Improved M41S catalyst and method of manufacture**

(71) Applicant: MOBIL OIL CORPORATION, Fairfax, Virginia 22037-0001 (US)
(72) Inventor: Quinones, Augusto R., Houston, Texas 77059 (US); Roth, Wieslaw Jerzy, Sewell, New Jersey 08080 (US)
(74) Representative: Hucker, Charlotte Jane

(57) **Abstract**

This invention relates to the catalyst composition resulting from the addition of phosphorus, and optionally, a matrix material, to a porous crystalline material having the structure of M41S, e.g., MCM-41, along with the method for making the catalyst composition, and the method for using the catalyst composition in catalytic cracking. The method provides a catalyst of enhanced hydrothermal stability.

## Description

This invention relates to the catalyst composition resulting from the addition of phosphorus, and optionally, a matrix-material, to a porous crystalline M41S material, e.g., MCM-41, along with the method for making the catalyst composition, and the method for using the catalyst composition in catalytic cracking processes.

Porous inorganic solids have great utility as catalysts and separation media for industrial applications. Catalytic and sorptive activity are enhanced by the extensive surface area provided by a readily accessible microstructure characteristic of these solids.

U.S. Patent No. 5,470,810 to Degnan et al., the contents of which is incorporated herein by reference, discloses a catalyst composition of improved hydrothermal stability which is prepared by contacting a porous, crystalline material having the structure of MCM-22 with a source of phosphorus.

U.S. Patent No. 5,156,829 to McCullen et al., the contents of which is incorporated herein by reference, discloses a method for improving stability of porous, crystalline M41S materials by contacting the crystalline material with halides or alkoxides of B, Al, Si, or Ti.

U.S. Patent No. 5,264,203 to Beck et al., incorporated herein by reference, discloses M41S ultra large-pore crystalline material, e.g., silicoaluminophosphate, which is prepared by I) crystallizing a first reaction mixture containing alumina, phosphoric acid, cetyltrimethylammonium hydroxide and pyrolidine and ii) contacting the crystallized product of I) with water, cetyltrimethylammonium hydroxide and an aqueous solution of tetramethylammonium silicate.

It is desirable to improve the hydrothermal stability of M41S compositions to increase the catalytic activity that the composition maintains after repeated cycles of steaming such as is experienced in the FCC process.

### Summary of the Invention

In accordance with the present invention, there has now been discovered an improved catalyst of enhanced hydrothermal stability which is obtained by treating ultralarge pore crystalline M41S materials with a source of phosphorus. The treated catalyst is useful in organic conversion processes, such as catalytic cracking processes, where the catalyst is subjected to hydrothermal conditions. The present invention exhibits enhanced hydrothermal stability compared to M41S materials which are not treated with phosphorus compounds.

The catalyst composition of the present invention comprises M41S synthetic porous crystalline material which has been treated by contact with a source of phosphorus. Also provided in this invention is a method for manufacture of this catalyst composition comprising modifying a porous crystalline M41S material by contacting the porous crystalline material with a source of phosphorus and then forming catalyst particles from the phosphorus modified material. A matrix material may also be added to the catalyst composition of this invention and the phosphorus may be added to either the porous crystalline material, the matrix material or both materials. Also the catalyst composition of this invention may be admixed with a large pore crystalline molecular sieve or additional mesoporous material. The improved catalyst of this invention may be used in organic conversion processes, such as catalytic cracking processes. These mesoporous materials are useful in catalytic cracking processes as disclosed in U.S. Patent No. 5,232,580, the contents of which is incorporated herein by reference.

### Brief Description of the Drawings

FIG. 1 is a graph showing the effect of phosphorus addition and/or steaming on the surface area of M41S (MCM-41) catalyst.

FIG. 2 is a graph showing the effect of phosphorus addition and/or steaming on the x-ray diffraction patterns of M41S (MCM-41) catalyst.

### Detailed Description

The porous crystalline material which is treated by the present invention is identified in this specification as an inorganic, porous, non-layered crystalline phase material exhibiting, after calcination, an x-ray diffraction pattern with at least one peak at a d-spacing greater than about 18 Angstrom Units with a relative intensity of 100 and a benzene adsorption capacity of greater than 15 grams benzene per 100 grams of said material at 50 torr and 25°C. The composition of matter is prepared by the steps of:
(a) preparing a mixture capable of forming said composition, said mixture comprising a source of silica, a source of alumina, an organic (R') agent and a solvent or solvent mixture, wherein R' comprises an ion of the formula R₁R₂R₃R₄Q⁺, wherein Q is nitrogen or phosphorus and wherein at least one of R₁, R₂, R₃ and R₄ is aryl or alkyl of from 6 to about 36 carbon atoms or combinations thereof, the remainder of R₁, R₂, R₃ and R₄ being selected from the group consisting of hydrogen, alkyl of from 1 to 5 carbon atoms and combinations thereof;
(b) maintaining said mixture under sufficient conditions of pH, temperature and time for formation of said composition of matter; and
(c) recovering said composition of matter.

The present invention concerns a porous crystalline M41S material which has been contacted with a source of phosphorus. The composition may further comprise at least one matrix material, non-limiting examples of which include at least one of clay, alumina, silica and mixtures thereof. Either the porous crystalline material, the matrix material, or both may be contacted with the source of phosphorus.

One embodiment of the present invention is a method for manufacture of a phosphorus-treated M41S composition comprising the steps of modifying M41S porous crystalline material by contacting said porous crystalline material with a source of phosphorus and forming a catalyst particle from the phosphorus modified porous crystalline material.

Another embodiment of the present invention is a method for manufacture of a composition comprising the steps of combining a porous crystalline M41S material and a source of phosphorus and at least one of a source of clay, a source of silica, a source of alumina, and mixtures thereof, and forming catalyst particles from said combination.

A more specific embodiment of this invention is a method for manufacture of a composition comprising the steps of preparing a slurry comprising alumina peptized with formic acid, then blending into the slurry a source of colloidal silica, a source of clay, and a porous crystalline M41S material, adding a source of phosphorus to the slurry, and finally forming catalyst particles from the slurry. The phosphorus may be added to any one or all of the slurries used to make the product.

Non-limiting examples of the source of phosphorus useful in the present invention include ammonium monohydrogen phosphate, ammonium dihydrogen phosphate, triammonium phosphate, ammonium hypophosphate, ammonium orthophosphate, ammonium dihydrogen orthophosphate, ammonium monohydrogen orthophosphate, ammonium hypophosphite, ammonium dihydrogen orthophosphite, phosphoric acid and mixtures thereof, more specifically phosphoric acid and ammonium dihydrogen phosphate, and most specifically, phosphoric acid. The phosphorus is typically added in an amount sufficient to yield a concentration of at least 0.1 wt.%, preferably 1 to 5 wt.%, on the finished catalyst.

Non-limiting examples of materials useful in this invention include kaolin or Thiele clay, as the source of clay, phosphoric acid or ammonium dihydrogen phosphate as the source of phosphorus, colloidal silica as the source of silica, and pseudoboehmite alumina as the source of alumina. Preferably, the catalyst should be formed and dried as rapidly as possible after mixing.

The composition of this invention may be useful in catalytic cracking, either alone, combined with a matrix, or combined with a large pore crystalline molecular sieve, which is itself catalytically active, or with combinations of the above.

The large pore (e.g., greater than about 7 Angstroms) crystalline molecular sieve which may be used is a material normally having a Constraint Index (as defined in U.S. Patent No. 4,016,218, incorporated by reference herein) less than 1. Large pore crystalline molecular sieves are well known in the art and include faujasite, mordenite, zeolite X, rare-earth exchanged zeolite X (REX), zeolite Y, zeolite Y (HY), rare earth-exchanged ultra stable zeolite Y (RE-USY), dealuminized Y (DAY), ultrahydrophobic zeolite Y (UHP-Y), dealuminized silicon enriched zeolites such as LZ-210, zeolite ZK-5, zeolite ZK-4, zeolite Beta, zeolite Omega, zeolite L, ZSM-20 and other natural or synthetic zeolites.

Other large pore crystalline molecular sieves which are useful herein include pillared silicates and/or clays; aluminophosphates, e.g., ALPO4-5, VPI-5; silicoalumino-phosphates, e.g., MCM-9, SAPO-5, SAPO-37, SAPO-31, SAPO-40, SAPO-41; and other metal aluminophosphates. These materials are variously described in U.S. Patent Nos. 4,440,871; 4,554,143; 4,567,029; 4,666,875 and 4,742,033.

Prior to use as a catalyst, the treated M41S material should be subjected to thermal treatment to remove part or all of any organic constituent present in the as-synthesized material.

The M41S material in its as-synthesized form containing organic cations as well as when it is in its ammonium form, can be converted to another form by thermal treatment. This thermal treatment is generally performed by heating one of these forms at a temperature of at least about 370°C? for at least 1 minute and generally not longer than 20 hours. While subatmospheric pressure can be employed for the thermal treatment, atmospheric pressure is preferred simply for reasons of convenience. The thermal treatment can be performed at a temperature of up to a limit imposed by the irreversible thermal degradation of the crystalline structure of the M41S material, typically up to about 800°C.

Although neither the cracking catalyst nor the additive catalyst need be steamed prior to use in the present process, and, in fact, are typically not steamed prior to use herein, they may be steamed at a temperature of from about 300°C to about 800°C for a time of from about 1 to about 200 hours in about 5 to about 100% steam.

The stability of the zeolite catalyst may be increased by steaming, with suitable steam stabilization conditions typically including contacting the catalyst with, e.g., 5 to about 100% steam at a temperature of at least about 300°C (e.g., 300°C - 650°C) for at least one hour (e.g., 1 - 200 hours) at a pressure of 100 - 2,500 kPa. In a more particular embodiment, the catalyst can be made to undergo steaming with 75 to about 100% steam at 315°C to about 500°C and atmospheric pressure for 2 - 25 hours.

The M41S material employed in the catalyst of this invention may be used in its as-synthesized form (i.e. still in contact with its organic directing agent, a nitrogen precalcined form, or a hybrid calcined form (e.g., precalcined with nitrogen and then calcined in air).

The M41S crystals can be shaped into a wide variety of particle sizes. Generally speaking, the particles can be in the form of a powder, a granule, or a molded product such as an extrudate having a particle size sufficient to pass through a 2 mesh (Tyler) screen and be retained on a 400 mesh (Tyler) screen. In cases where the catalyst is molded, such as by extrusion, the crystals can be extruded before drying or partially dried and then extruded.

The porous crystalline M41S material may be composited with another material which is resistant to the temperatures and other conditions employed in the organic conversion process of this invention. Such materials include active and inactive materials and other synthetic or naturally occurring porous crystalline molecular sieves as well as inorganic materials such as clays and/or oxides such as alumina, silica or silica-alumina. The latter may be either naturally occurring or in the form of gelatinous precipitates or gels including mixtures of silica and metal oxides.

Naturally occurring clays which can be used as matrix materials with any or all catalyst components herein include the montmorillonite and kaolin family, which families include the subbentonites, and the kaolins commonly known as Dixie, McNamee, Georgia, and Florida clays or others in which the main mineral constituent is halloysite, kaolinite, dickite, nacrite, or anauxite. Such clays can be used in the raw state as originally mined or initially subjected to calcination, acid treatment or chemical modification.

In addition to the foregoing materials, either or both catalyst components can be composited with one or more porous matrix materials such as silica, alumina, silica-alumina, silica-magnesia, silica-zirconia, silica-thoria, silica-berylia, silica-titania, as well as ternary oxide compositions such as silica-alumina-thoria, silica-alumina-zirconia, silica-alumina-magnesia, silica-magnesia-zirconia, and the like. It may also be advantageous to provide at least a part of the foregoing matrix materials in colloidal form so as to facilitate extrusion of the bound catalyst component(s).

The relative proportions of catalyst component(s) and matrix can vary widely with the content of the former ranging from about 1 to about 95 percent by weight, and more usually from about 10 to about 70 wt.%, of the composite. The large pore crystalline cracking catalyst component, the mesoporous material and the porous crystalline material can be independently composited with the same or different matrix material or all of these materials can be incorporated together in the same matrix material.

As mentioned earlier, the catalyst composition of this invention is useful as a catalyst for organic compound, e.g., hydrocarbon compound, conversion. Non-limiting examples of processes for organic compound conversion include Fluid Catalytic Cracking (FCC) and other forms of catalytic cracking including moving bed catalytic cracking and hydrocracking.

Suitable catalytic cracking conditions include a temperature ranging from about 700°F to about 1300°F and a pressure ranging from subatmospheric to several hundreds of atmospheres. The catalytic cracking process can be either fixed bed, moving bed, transfer line, or fluidized bed, and the hydrocarbon flow may be either concurrent or countercurrent to the catalyst flow. The process of the invention is particularly applicable to the Fluid Catalytic Cracking (FCC) or Thermofor Catalytic Cracking (TCC) processes. In both of these processes, the hydrocarbon feed and catalyst are passed through a reactor and the catalyst is regenerated. The two processes differ substantially in the size of the catalyst particles and in the engineering contact and transfer which is at least partially a function of catalyst size.

The TCC process is a moving bed and the catalyst is in the shape of pellets or beads having an average particle size of about one-sixty-fourth to one-fourth inch. Active, hot catalyst beads progress downwardly cocurrent with a hydrocarbon charge stock through a cracking reaction zone. The hydrocarbon products are separated from the coked catalyst and recovered, and the catalyst is recovered at the lower end of the zone and regenerated.

Typical TCC conversion conditions include an average reactor temperature of from about 450°C to about 540°C; catalyst/oil volume ratio of from about 2 to about 7; reactor volume hourly space velocity of from about 1 to about 5 vol./hr./vol.; and recycle to fresh feed ratio of from 0 to about 0.5 (volume).

The process of the invention is also applicable to Fluid Catalytic Cracking (FCC). In fluidized catalytic cracking processes, the catalyst is a fine powder of about 10 to 200 microns. This powder is generally suspended in the feed and propelled upward in a reaction zone. A relatively heavy hydrocarbon feedstock, e.g., a gas oil, is admixed with a suitable cracking catalyst to provide a fluidized suspension and cracked in an elongated reactor, or riser, at elevated temperatures to provide a mixture of lighter hydrocarbon products. The gaseous reaction products and spent catalyst are discharged from the riser into a separator, e.g., a cyclone unit, located within the upper section of an enclosed stripping vessel, or stripper, with the reaction products being conveyed to a product recovery zone and the spent catalyst entering a dense catalyst bed within the lower section of the stripper. In order to remove entrained hydrocarbons from the spent catalyst prior to conveying the latter to a catalyst regenerator unit, an inert stripping gas, e.g., steam, is passed through the catalyst bed where it desorbs such hydrocarbons conveying them to the product recovery zone. The fluidizable catalyst is continuously circulated between the riser and the regenerator and serves to transfer heat from the latter to the former thereby supplying the thermal needs of the cracking reaction which is endothermic.

The FCC conversion conditions include a riser top temperature of from about 500°C to about 595°C, specifically from about 520°C to about 565°C, and most specifically from about 530°C to about 550°C; catalyst/oil weight ratio of from about 3 to about 12, specifically from about 4 to about 11, and most specifically from about 5 to about 10; and catalyst residence time of from about 0.5 to about 15 seconds, specifically from about 1 to about 10 seconds.

It is generally necessary that the catalysts be resistant to mechanical attrition, that is, the formation of fines which are small particles, e.g., less than 20 µm. The cycles of cracking and regeneration at high flow rates and temperatures, such as in an FCC process, have a tendency to break down the catalyst into fines, as compared with an average diameter of catalyst particles of about 60-100 microns. In an FCC process, catalyst particles range from about 10 to about 200 microns, preferably from about 20 to 150 microns. Excessive generation of catalyst fines increases the refiner's catalyst costs.

The feedstock, that is, the hydrocarbons to be cracked, may include in whole or in part, a gas oil (e.g., light, medium, or heavy gas oil) having an initial boiling point above about 204°C, a 50% point of at least about 260°C, and an end point of at least about 315°C. The feedstock may also include deep cut gas oil, vacuum gas oil, thermal oil, residual oil, cycle stock, whole top crude, tar sand oil, shale oil, synthetic fuel, heavy hydrocarbon fractions derived from the destructive hydrogenation of coal, tar, pitches, asphalts, hydrotreated feedstocks derived from any of the foregoing, and the like. As will be recognized, the distillation of higher boiling petroleum fractions above about 400°C must be carried out under vacuum in order to avoid thermal cracking. The boiling temperatures utilized herein are expressed in terms of convenience of the boiling point corrected to atmospheric pressure. Resids or deeper cut gas oils having an end point of up to about 700°C, even with high metals contents, can also be cracked using the invention.

### Examples

Treated M41S (MCM-41) catalysts of this invention and untreated comparative catalysts were prepared and tested to determine surface area and hexane cracking activity (alpha value) of the catalysts. Surface area was determined by using the Micrometrics Dipisorb 2600 instrument. When alpha value is examined, it is noted that the alpha value is an approximate indication of the catalytic cracking activity of the catalyst compared to a standard catalyst and it gives the relative rate constant (rate of normal hexane conversion per volume of catalyst per unit time). It is based on the activity of silica-alumina cracking catalyst taken as an alpha of 1 (rate constant is 0.016 sec⁻¹). The alpha test is described in U.S. Patent No. 3,354,078; in the Journal of Catalysis, Vol. 4, p 527 (1965); Vol. 6, p. 278 (1966); and Vol. 61, p. 395 (1980), each incorporated herein by reference as to that description. The experimental conditions of the test used herein include a constant temperature of 538°C and a variable flow rate as described in detail in the Journal of Catalysis, Vol. 61, p. 395. The higher alpha values correspond with a more active cracking catalyst.

### Example 1

### Preparation of the M41S material.

The synthesis mixture consisted of 1.2 kg of water, 3.75 kg of 35% solution of tetraethylammonium hydroxide (SACHEM Chem., Inc.), 3.5 kg of silica-alumina precursor (prepared by co-precipitation of sodium silicate and aluminum sulfate solution at pH ~8; analysis: 45.5% solids, 2.835% alumina, >85 ppm Na) and 5.6 kg of 37% solution of dodecyltrimethyl- ammonium chloride (from Akzo). The synthesis was carried out in a 5 gallon autoclave at 130°C for 24 hours with stirring at 50 RPM. The solid product was isolated by filtration, washed with water and dried at ~250°F. Analysis: 60.1% solids, 0.26% Na, 4.5% alumina, 2% N and 25.7% C. Organic free solid was obtained by the standard heat treatment: heating in the atmosphere of nitrogen at 900°F for three hours followed by 6 hours in air at 1000°F.

### Example 2

A catalyst containing 40% MCM-41 in a silica-alumina-clay matrix was produced by spray drying according to the following procedure: 0.01 parts by weight of alumina (Condea Pural, SBIII pseudoboehmite alumina, Condea Chemie GMBH, Hamburg, Germany were slurried in distilled water and peptized with 0.002 parts by weight formic acid (90%). This gel was added to 0.218 parts by weight of colloidal silica (Nalco 1034A, 34% solids, Nalco Chemical Co., Chicago, IL) and mixed for 3 minutes. 0.136 parts by weight of kaolin clay, (Thiele RC-32, 60.4% solids, Thiele Kaolin Co., Sandersonville, GA) were added to the silica-alumina solution. 0.635 parts by weight of ball milled M41S of Example 1 (17.2% solids, >95% less than 10 microns) were added to the silica-alumina slurry. The resulting slurry was spray dried (Niro Inc., Columbia, MD, spray dryer) at an outlet temperature of 350°F. The spray dried material was calcined for two hours at 1,000°F in air.

### Example 3

Example 2 was repeated except that 0.033 parts by weight of phosphoric acid (75%) were added to the slurry as the last step.

### Example 4

The catalysts of Examples 2 and 3 were steamed 10 hours at 1450°F in 45% steam. Table 1 shows the surface area of the catalysts before and after steaming. The phosphorus treated material (Example 3) retained more surface area relative to both the treated and untreated parent material.

**TABLE 1**

| | Calcined m²/g | Steamed m²/g | Surface Area Retention |
|---|---|---|---|
| Untreated MCM-41 | 940 | | |
| Ex.1 Si | 340 | 76 | 22% |
| Ex.2 | 252 | 126 | 50% |

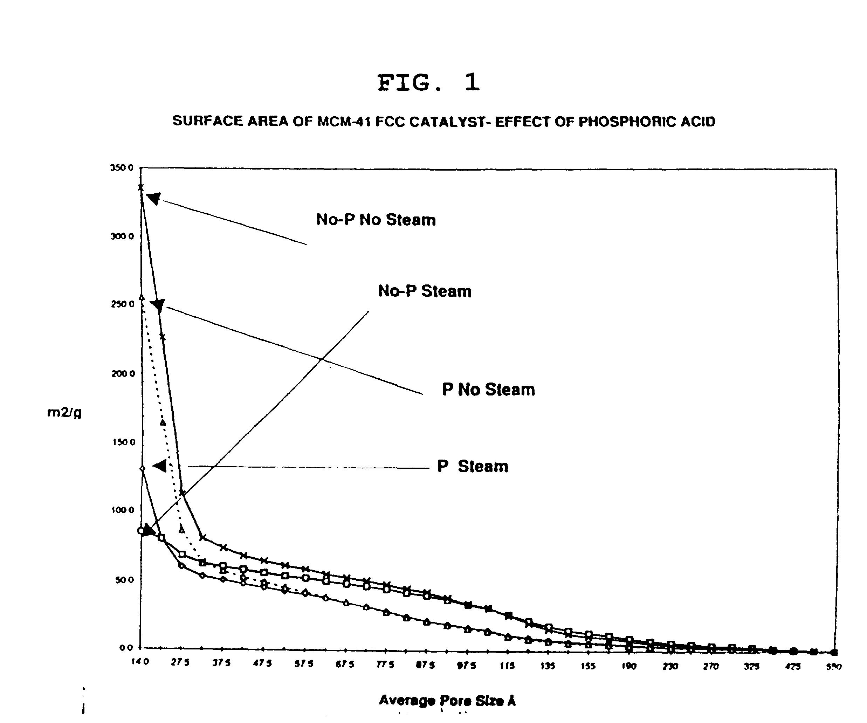

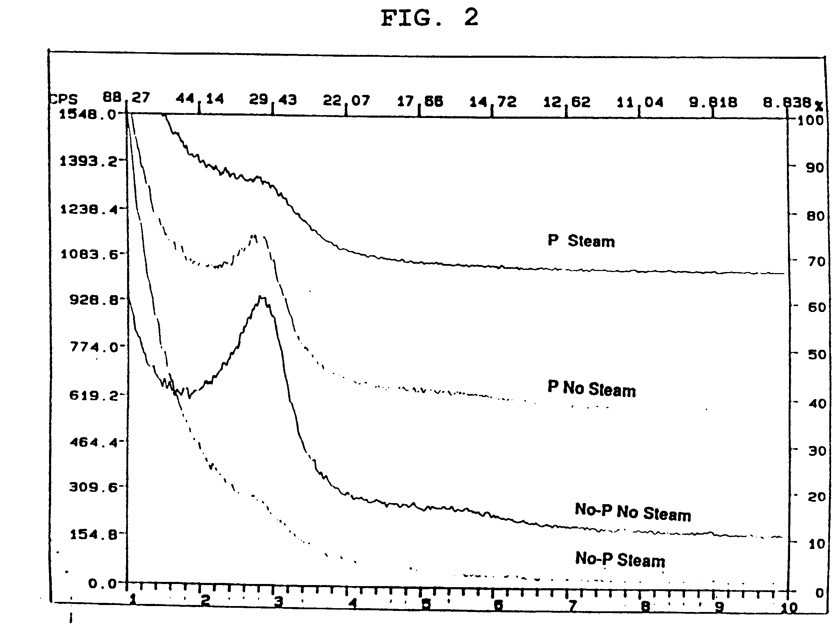

FIG. 1 shows that for the phosphorus-treated sample, most of the surface area is concentrated in the region close to <40 Angstroms. This clearly indicates that the surface area retention is associated with phosphoric acid treatment of M41S. This is corroborated by the x-ray diffraction patterns shown in FIG. 2 inasmuch as the phosphorous treated steamed catalysts show better retention of the low angle lines at approximately 3 degrees attributed to M41S.

A comparison of the alpha activities of the above catalysts shows that the incorporation of phosphorus into the catalyst composition improves the hydrothermal stability of the catalyst. The catalysts prepared according to Example 2 exhibited hexane conversions of 0.51% before steaming and 0.1% after steaming. In contrast, the phosphorus-treated catalysts prepared according to Example 3 exhibited hexane conversions of 0.58% before steaming and 0.51% after steaming.

## Claims

1. A catalyst composition obtainable by treatment, with a source of phosphorus, of an inorganic, porous, non-layered crystalline phase material exhibiting, after calcination, an x-ray diffraction pattern with at least one peak at a d-spacing greater than 18 Angstrom Units and having a benzene adsorption capacity of greater than 15 grams benzene per 100 grams of said material at 6.7 kPa (50 torr) and 25°C.

2. A composition according to claim 1, wherein the inorganic, porous, non-layered crystalline phase material comprises MCM-41.

3. A composition according to claim 1 or claim 2, wherein the source of phosphorus is selected from ammonium monohydrogen phosphate, ammonium dihydrogen phosphate, triammonium phosphate, ammonium hypophosphate, ammonium orthophosphate, ammonium dihydrogen orthophosphate, ammonium monohydrogen orthophosphate, ammonium hypophosphite, ammonium dihydrogen orthophosphite, phosphoric acid, and mixtures thereof, preferably the source of phosphorus being phosphoric acid.

4. A composition according to any preceding claim, which further comprises a matrix material, preferably the matrix material being selected from clay, alumina, silica, and mixtures thereof.

5. A composition according to any preceding claim, wherein the porous crystalline material is treated in its as-synthesized form with the source of phosphorous.

6. A composition according to any preceding claim, which further comprises a phosphorous content greater than about 0.1 wt%.

7. A catalyst composition comprising the product of thermal treatment of a composition as defined in any preceding claim, the thermal treatment being carried out at a temperature up to about 925°C, in the presence or absence of steam.

8. A composition comprising phosphorus in combination with a porous crystalline material as defined in claim 1, and at least one material selected from a large pore zeolite, a mesoporous material and mixture thereof.

9. A method for preparing a catalyst composition comprising:
(a) modifying a composition comprising an inorganic, porous, non-layered crystalline phase material exhibiting, after calcination, an x-ray diffraction pattern with at least one peak at a d-spacing greater than 18 Angstrom Units and having a benzene adsorption capacity of greater than 15 grams benzene per 100 grams of said material at 6.7 kPa (50 torr) and 25°C, by contacting said composition with a source of phosphorus; and
(b) forming catalyst particles from the phosphorus-modified porous crystalline material.

10. A method according to claim 9, wherein prior to modification, the composition comprises MCM-41.

11. A method according to claim 9 or claim 10, wherein the source of phosphorus is selected from ammonium monohydrogen phosphate, ammonium dihydrogen phosphate, triammonium phosphate, ammonium hypophosphate, ammonium orthophosphate, ammonium dihydrogen orthophosphate, ammonium monohydrogen orthophosphate, ammonium hypophosphite, ammonium dihydrogen orthophosphite, phosphoric acid, and mixtures thereof, preferably the source of phosphorus being phosphoric acid.

12. A method according to any of claims 9 to 11, which further comprises adding a matrix material to the porous crystalline material and contacting the porous crystalline material and/or the porous crystalline material with the source of phosphorus, prior to forming the catalyst particles.

13. A method according to any of claims 9 to 12, which further comprises thermally treating the formed particles at a temperature up to about 925°C in the presence or absence of steam.

14. A method for preparing a catalyst composition comprising the steps of:
i) preparing a slurry comprising alumina peptized with formic acid,
ii) blending into said slurry a source of colloidal silica, a source of clay, and a porous crystalline M41S material,
iii) adding a source of phosphorus to said slurry, and
iv) forming catalyst particles from the slurry of step iii.
